# EUROPEAN PATENT SPECIFICATION

(11) **EP 2 305 440 B1**
(45) Date of publication and mention of the grant of the patent: **04.12.2013**
(21) Application number: 10186161.5
(22) Date of filing: 01.10.2010
(51) Int. Cl.: B27M 1/08, B23Q 7/04

(54) **Method and machine for processing frame components made of wood and the like**
Verfahren und Vorrichtung zur Verarbeitung von Bauteilen aus Holz und dergleichen
Procédé et appareil pour le traitement de composants en bois.

(30) Priority: 02.10.2009 IT BO20090640
(43) Date of publication of application: 06.04.2011
(73) Proprietor: BIESSE S.p.A., Pesaro (IT)
(72) Inventor: Bernardi, Paolo, 47841 Cattolica (IT)
(74) Representative: Bergadano, Mirko

(56) References cited:
- EP-A1- 0 335 464
- EP-A1- 1 600 254
- EP-A2- 1 281 491
- US-A- 3 814 153

## Description

The present invention relates to a machine and a method for processing frame components made of wood or the like, as per the preamble of claims 1 and 13. An example of such an apparatus and method is disclosed by EP-A-335464.

Hereinafter, the term "frame" will be used to identify doors, windows and furniture doors comprising a closing plate, e.g. made of glass, mounted within an annular supporting frame, normally defined by a plurality of components made of wood or the like and connected to one another.

In the processing field of frame components, it is known to provide a machine comprising an elongated base, which extends in a first, substantially horizontal direction, and has two guiding longitudinal members parallel to the first direction itself; a plurality of crosspieces, which are mounted between the guiding longitudinal members parallel to a second, substantially horizontal direction, transversal to the first direction and are mobile along the base in the first direction itself; at least one clamping vice mounted on each crosspiece to withhold at least one component and move along the crosspiece itself in the second direction; and a bridge crane, which extends over the base in the second direction, is mobile along the base in the first direction and is provided with at least one working head.

The machine further comprises an inlet station, an outlet station, and a grip and transfer device, normally mounted on the bridge crane to transfer the components to be processed from the inlet station into the respective clamping vices and the recently processed components from the respective clamping vices in the outlet station. ,

Because the bridge crane is alternatively engaged either in the processing operations of components or in the transferring operation of the components between the respective clamping vices and the mentioned inlet and outlet stations, the machines for processing wood components or the like for known frames of the type described above, although highly tried and tested, have a relatively low flexibility and productivity.

Document EP-A-335464 discloses an apparatus for machining wooden articles comprising a series of operating stations for carrying out a plurality of machining operations on a wooden article. Each wooden article is transported along the series of operating stations by means of a clamping bench which is moved following each operation to the next station while the wooden article remains clamped thereon. During moving the clamping action is carried out with clamping devices which can move synchronously with the clamping benches while in each operating station the clamping action may be achieved either by stationary clamping devices connected to the operating station or by the clamping devices which can move with the clamping bench.

It is an object of the present invention to provide a machine for processing components made of wood or the like which is free from the above-described drawbacks and which is simple and cost-effective to make.

According to the present invention, there is provided a machine for processing frame components made of wood or the like as disclosed in the independent claims 1 and 13.

The present invention will now be described with reference to the appended drawings, which illustrate a non-limitative embodiment thereof, in which:
figure 1 is a schematic perspective view, with parts removed for clarity, of a preferred embodiment of the machine according to the present invention;

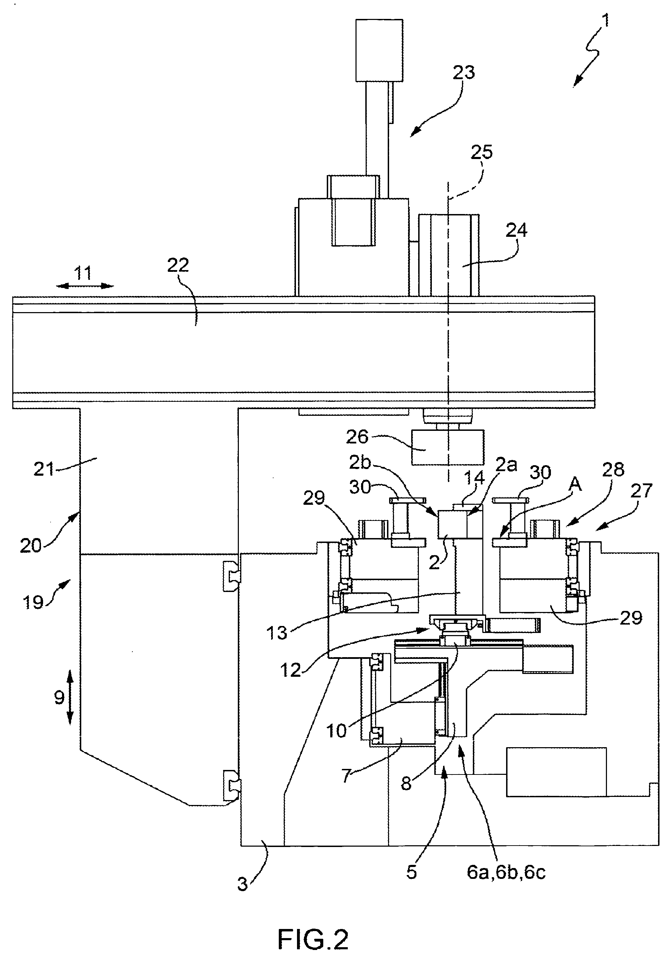

figure 2 is a schematic side view, with parts removed for clarity, of the machine in figure 1; and
figure 3 schematically shows the operation of the machine in figures 1 and 2.

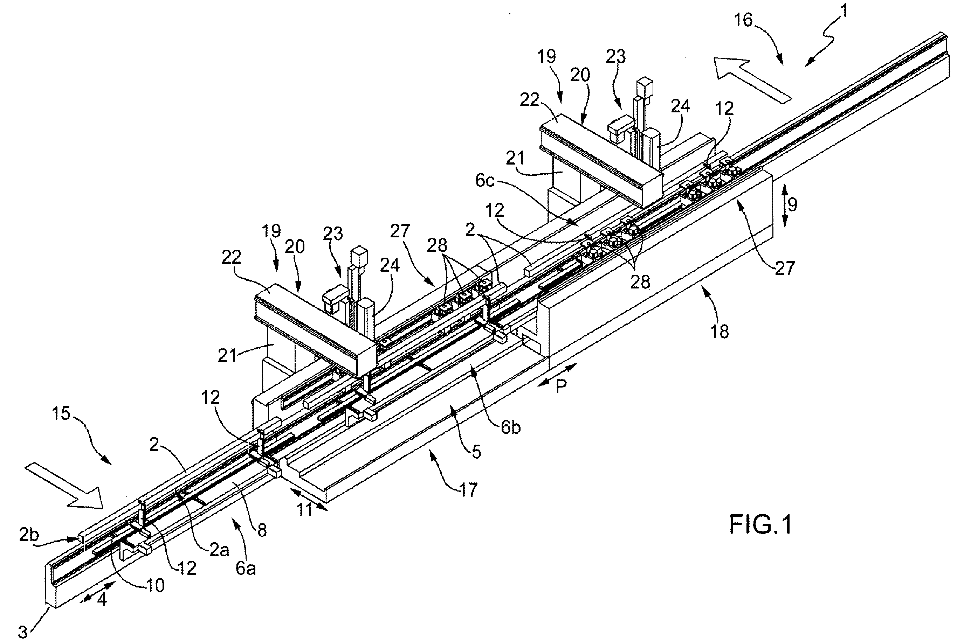

With reference to figure 1, numeral 1 indicates as a whole a machine for processing components 2 made of wood or the like of elongated shape for the production of frames.

The machine 1 comprises an elongated base 3, which extends in a horizontal direction 4, and supports a grip and transfer unit 5, which advances the components 2 longitudinally along the base 3 in direction 4, and comprises, in the case in hand, three grip and transfer assemblies 6a, 6b, 6c arranged in sequence along the base 3 itself.

Each assembly 6a, 6b, 6c comprises a first horizontal slide 7 slidingly coupled to the base 3 to perform rectilinear movement in direction 4 with respect to the base 3; a vertical slide 8, slidingly coupled to the slide 7 to perform rectilinear movements with respect to the slide 7 in a vertical direction 9 traversal to direction 4; and a second horizontal slide 10, slidingly coupled to the slide 8 to perform with respect to the slide 8 rectilinear movements in a horizontal direction 11 orthogonal to directions 4 and 9.

The slide 10 supports in the case in point two grip and transfer devices 12 each of which comprises a lower jaw 13 slidingly coupled to the slide 10 to perform, with respect to the slide 10, rectilinear movement in direction 4, and an upper jaw 14 slidingly coupled to the jaw 13 to perform rectilinear movements in direction 9 with respect to the jaw 13 between a clamping position and a releasing position of a component 2.

The assemblies 6a, 6b, 6c are fed in direction 4 along a path P extending through an inlet station 15 of the components 2 to be processed in the machine 1, an outlet station 16 of the newly processed components 2 from the machine 1, and two working stations 17, 18, which are arranged between the two stations 15, 16, are mutually aligned with one another and the stations 15, 16 in direction 4, and are provided with respective working units 19 for processing the components 2.

Each unit 19 comprises a bridge crane 20, comprising in turn a vertical upright 21, which is coupled in known manner to the base 3 to perform rectilinear movements with respect to the base 3 along the base 3 in direction 4, and carries a crosspiece 22 connected to a free end thereof, which extends over the base 3 in direction 11, and supports a working head 23 of the known type fitted on the crosspiece 22 to perform rectilinear movements in direction 11 along the crosspiece 22 itself.

The head 23 comprises, in the case in point, a spindle 24, which has a longitudinal axis 25 parallel to direction 9, is adapted to receive and withhold a tool 26, and is fitted in known manner on the head 23 to perform rectilinear movements in direction 9 itself with respect to the head 23.

The two stations 17, 18 are further provided with respective grip assemblies 27, which are arranged on opposite sides of the path P in direction 11, and each comprises a plurality of grip devices 28 (six devices 28 in the case in point).

Each device 28 has a lower jaw 29, which is slidingly coupled to the base 3 to perform, with respect to the base 3, rectilinear movements in direction 4, and defines, jointly with the jaws 29 of other devices 28, a supporting plane A for at least one component 2, and an upper jaw 30 coupled in known manner to the jaw 29 to perform rectilinear movements in direction 9 with respect to the jaw 29 between a clamping position and a releasing position of a component 2.

As regards the above, it is worth specifying that:
the position of the grip and transfer devices 12 along the respective slides 10 and of the grip devices 28 along the base 3 is selectively controlled during a step of tooling of the machine 1, according to the size of the components 2 and/or of the processes to be carried out on the components 2 themselves; and
the number of the grip and transfer assemblies 6a, 6b, 6c is equal to the number of inlet stations 15, outlet stations 16, and working stations 17, 18 minus one.

In use, the three grip and transfer assemblies 6a, 6b, 6c are moved with respective identical laws of motion along the base 3 starting from an initial position, wherein the grip and transfer assemblies 6a, 6b, 6c are arranged in stations 15, 17 and, respectively, 18.

Assuming that each assembly 6a, 6b, 6c feeds only one component 2 at a time, the assemblies 6a, 6b, 6c are moved in direction 4 with an alternative rectilinear motion comprising a forth stroke, wherein the assemblies 6a, 6b, 6c are moved in the stations 17, 18, and, respectively, 16 to feed a first component 2 from inlet station 15 to the working station 17, a second component 2 from the working station 17 to the working station 18, and a third component 2 from the working station 18 to the outlet station 16, and a back stroke, wherein the assemblies 6a, 6b, 6c are moved back to the initial position thereof.

At the end of each forth stroke, a component 2 is transferred by the assembly 6a into the grip devices 28 of the working station 17 so as to allow the respective working unit 19 to process at least one longitudinal face 2a of the component 2 parallel to direction 4 and protruding from the devices 28 themselves in direction 11; a component 2 is transferred by the assembly 6b into the grip devices 28 of the working station 18 so as to allow the respective working unit 19 to process at least one longitudinal face 2b of the component 2 parallel and opposite to the respective face 2a and protruding from the devices 28 themselves in direction 11; and a component 2 is released from the assembly 6c in outlet station 16.

At the end of each back stroke, a component 2 is taken by the assembly 6a in the inlet station 15, a component 2 is taken by the devices 28 of the working station 17 by means of the assembly 6b, and a component 2 is taken by the devices 28 of the working station 18 by means of the assembly 6c.

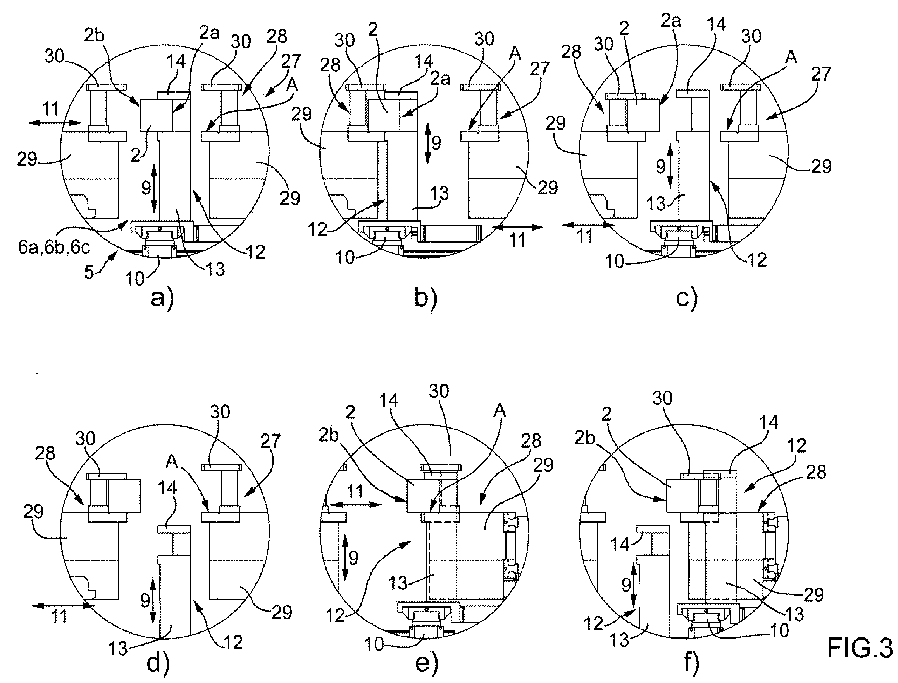

As regards the above, it is worth specifying that:
during the back stroke of the assemblies 6a, 6b, 6c to the initial position thereof, the devices 12 are lowered underneath the plane A in direction 9 to allow the processing of the faces 2a, 2b of the components 2 arranged on a case-by-case basis in stations 17, 18 (figure 3d);
the transfer of the components 2 in the devices 28 of the station 17 only implies the movement of the slide 10 of the assembly 6a in direction 11 (figures 3a, 3b, and 3c);
the picking of the components 2 by the devices 28 of the station 17 only implies the movement of the slide 10 of the assembly 6b in direction 11 (figures 3a, 3b, and 3c);
each component 2 is transferred into the devices 28 of the station 18 retracting the slide 10 of assembly 6b in direction 11 so as to feed the respective devices 12 between the respective devices 28, releasing the component 2 in the devices 28, lowering the devices 12 in direction 9 underneath plane A, and feeding the slide again 10 of the assembly 6b in direction 11 so as to move the devices 12 underneath the component 2 and inside the path P (figures 3e and 3f);
each component 2 is taken by the devices 28 of the station 18 lowering the devices 12 of the assembly 6c underneath the plane A, retracting the slide 10 of the assembly 6c in direction 11 so as to move the devices 12 underneath the component 2, lifting the devices 12 again over the plane A, and feeding the slide 10 of the assembly 6c in direction 11 so as to move the devices 12 between the devices 28 and to pick the component 2 itself (figures 3e and 3f);
during the back stroke of the assemblies 6a, 6b, 6c to the initial position thereof, the position of the respective devices 12 in directions 4 and/or 11 is selectively controlled according to the size of the new component 2 to be picked from station 15, of the component 2 to be transferred from station 17 to the station 18, and of the component 2 to be transferred from station 18 to station 16;
during the forth stroke of the assemblies 6a, 6b, 6c, the position of the devices 28 is selectively controlled in direction 4 according to the size of the components 2 fed into stations 17 and 18 and/or of the processes to be carried out on the components 2 themselves and/or so as to allow to transfer the components 2 between the devices 12 and 28 avoiding any interference between the devices 12 and 28 themselves.

The conformation of the machine 1, the presence of the grip and transfer unit 5, and the alternative rectilinear motion of the assemblies 6a, 6b, 6c along the base 3 in the direction 4 confer a relatively high productivity to the machine 1 itself.

According to some variants (not shown), the number of grip and transfer devices 12 of each assembly 6a, 6b, 6c is different from two, the number of components 2 fed by each assembly 6a, 6b, 6c is different from one, and each working unit 19 further comprises a respective tool magazine and a respective tool change device for transferring each tool 26 between the respective working head 23 and the respective tool magazine itself.

## Claims

1. Machine for processing frame components (2) made of wood or the like, each component (2) having an elongated shape; the machine comprising a base (3) extending in a given first direction (4); an inlet station (15) of at least a component (2) in the machine; an outlet station (16) of the component (2) from the machine; and at least a working station (17, 18) which is arranged between the inlet and the outlet stations (15, 16), is aligned to the inlet and the outlet stations (15, 16) in the first direction (4), is provided with at least a working unit (19) for processing the component (2), and comprises a grip assembly (27) to hold the component (2) parallelly to the first direction (4) during the processing of the working unit (19); and being **characterized in that** it further comprises a grip and transfer unit (5) which is suitable to longitudinally advance each component (2) in the first direction (4) and along a given path (P) extending through the inlet station (15), the working station (17, 18) and the outlet station (16), and is mobile with an alternative rectilinear motion comprising a forth stroke for feeding at least a first component (2) from the inlet station (15) to the working station (17, 18) and at least a second component (2) from the working station ((17, 18) to the outlet station (16), and a back stroke.

2. Machine according to Claim 1, wherein the grip and transfer unit (5) comprises a first grip and transfer assembly (6a) mobile between the inlet station (15) and the working station (17, 18) and a second grip and transfer assembly (6c) mobile between the working station (17, 18) and the outlet station (16); each said first and second grip and transfer assembly (6a, 6c) and the grip assembly (27) being mutually mobile in a second direction (11) substantially horizontal and transversal to the first direction (4) to allow the transfer of the components (2) between the grip and transfer assemblies (6a, 6b) and the grip assembly (27).

3. Machine according to Claim 1 or 2, and comprising at least two said working stations (17, 18) which are arranged between the inlet and the outlet stations (15, 16), are aligned to each other and to the inlet and the outlet stations (15, 16) in the first direction (4) and along the path (P), are provided with respective said working units (19) for processing two mutually opposed longitudinal faces (2a, 2b) of each component (2), and comprise respective said grip assemblies (27) arranged on opposite sides of the path (P) in a second direction (11) substantially horizontal and transversal to the first direction (4).

4. Machine according to Claim 3, wherein the grip and transfer unit (5) comprises a first grip and transfer assembly (6a) mobile between the inlet station (15) and a first said working station (17), a second grip and transfer assembly (6b) mobile between the first working station (17, 18) and a second said working station (18), and a third grip and transfer assembly (6c) mobile between the second working station (18) and the outlet station (16); each said first, second and third grip and transfer assembly (6a, 6b, 6c) and each said grip assembly (27) being mutually mobile in the second direction (11) to allow the transfer of the components (2) between the grip and transfer assemblies (6a, 6b, 6c) and the grip assemblies (27).

5. Machine according to Claim 4, wherein said alternative rectilinear motion comprises a forth stroke for feeding a first component (2) from the inlet station (15) to the first working station (17), a second component (2) from the first working station (17) to the second working station (18), and a third component (2) from the second working station (18) to the outlet station (16), and a back stroke.

6. Machine according to Claim 4 or 5, wherein the grip assembly (27) of the second working station (18) defines a supporting plane (A) for the component (2); each said second and third grip and transfer assembly (6b, 6c) and the grip assembly (27) of the second working station (18) being mutually mobile in a third direction (9) substantially vertical and orthogonal to said first and second direction (4, 11) to move each said second and third grip and transfer assembly (6b, 6c) below the supporting plane (A).

7. Machine according to any one of the preceding Claims, wherein each said grip and transfer assembly (6a, 6b, 6c) comprises at least a relative clamping vice (12) and each said grip assembly (27) comprises at least a relative clamping vice (28).

8. Machine according to Claim 7, wherein each grip and transfer assembly (6a, 6b, 6c) comprises at least two relative clamping vices (12) mutually mobile in the first direction (4) and each grip assembly (27) comprises at least two further relative clamping vices (28) mutually mobile in the first direction (4).

9. Machine according to any one of the preceding Claims, wherein each working unit (19) comprises a bridge crane (20) which is mobile along the base (3) in the first direction (4), extends above the base (3) in a second direction (11) substantially horizontal and transversal to the first direction (4), and is provided with at least a working head (23) for processing the components (2).

10. Machine according to Claim 9, wherein each working unit (19) further comprises a tool holder store for a plurality of tools (26) and a tool-changing device for transferring each tool (26) between the relative working head (23) and the tool holder store.

11. Machine according to Claim 9 or 10, wherein each bridge crane (20) is mobile along the base (3) in the first direction (4) with a relative law of motion independent of the law of motion of the grip and transfer unit (5).

12. Machine according to Claim 2 or 4, wherein the grip and transfer assemblies (6a, 6b, 6c) are mobile along the base (3) in the first direction (4) with respective identical laws of motion.

13. Method for processing frame components (2) made of wood or the like, each component (2) having an elongated shape, in a machine comprising a base (3) extending in a given first direction (4); an inlet station (15) of at least a component (2) in the machine; an outlet station (16) of the component (2) from the machine; and at least a working station (17, 18) which is arranged between the inlet and the outlet stations (15, 16), is aligned to the inlet and the outlet stations (15, 16) in the first direction (4), is provided with at least a working unit (19) for processing the component (2), and comprises a grip assembly (27) to hold the component (2) parallelly to the first direction (4) during the processing of the working unit (19); the method comprising the step of:
longitudinally advancing each component (2) in the first direction (4) and along a given path (P) extending through the inlet station (15), the working station (17, 18) and the outlet station (16) by means of a grip and transfer unit (5);
and being **characterized in that** it further comprises the step of:
moving the grip and transfer unit (5) with an alternative rectilinear motion comprising a forth stroke for feeding at least a first component (2) from the inlet station (15) to the working station (17, 18) and at least a second component (2) from the working station (17, 18) to the outlet station (16), and a back stroke.

14. Method according to Claim 13 and further comprising the steps of:
moving a first grip and transfer assembly (6a) of the grip and transfer unit (5) between the inlet station (15) and the working station (17, 18);
moving a second grip and transfer assembly (6c) of the grip and transfer unit (5) between the working station (17, 18) and the outlet station (16); and
mutually moving each said first and second grip and transfer assembly (6a, 6c) and the grip assembly (27) in a second direction (11) substantially horizontal and transversal to the first direction (4) to allow the transfer of the components (2) between the grip and transfer assemblies (6a, 6b) and the grip assembly (27).

15. Method according to Claim 13 or 14, wherein the path (P) extends through two said working stations (17, 18) which are arranged between the inlet and the outlet stations (15, 16), are aligned to each other and to the inlet and the outlet stations (15, 16) in the first direction (4), are provided with respective said working units (19) for processing two opposite longitudinal faces (2a, 2b) of each component (2), and comprise respective said grip assemblies (27) arranged on opposite sides of the path (P) in a second direction (11) substantially horizontal and transversal to the first direction (4); the method further comprising the steps of:
moving a first grip and transfer assembly (6a) of the grip and transfer unit (5) between the inlet station (15) and a first said working station (17);
moving a second grip and transfer assembly (6b) of the grip and transfer unit (5) between the first working station (17, 18) and a second said working station (18);
moving a third grip and transfer assembly (6c) of the grip and transfer unit (5) between the second working station (18) and the outlet station (16); and
mutually moving each said first, second and third grip and transfer assembly (6a, 6b, 6c) and each said grip assembly (27) in the second direction (11) to allow the transfer of the components (2) between the grip and transfer assemblies (6a, 6b, 6c) and the grip assemblies (27).

16. Method according to Claim 15 and further comprising the step of:
advancing, during the forth stroke of the grip and transfer unit (5), a first component (2) from the inlet station (15) to the first working station (17), a second component (2) from the first working station (17) to the second working station (18), and a third component (2) from the second working station (18) to the outlet station (16).

17. Method according to Claim 15 or 16, wherein the grip assembly (27) of the second working station (18) defines a supporting plane (A) for the component (2), the method further comprising the step of:
mutually moving each said second and third grip and transfer assembly (6b, 6c) and the grip assembly (27) of the second working station (18) in a third direction (9) substantially vertical and orthogonal to said first and second directions (4, 11) to move each said second and third grip and transfer assembly (6b, 6c) below the supporting plane (A).

18. Method according to any one of Claims from 13 to 17, wherein each grip and transfer assembly (6a, 6b, 6c) comprises at least two relative clamping vices (12), the method further comprising the step of:
selectively controlling during said back stroke the position of the clamping vices (12) of each grip and transfer assembly (6a, 6b, 6c) in the first direction (4) and/or in a second direction (11) substantially horizontal and transversal to the first direction (4) according to the size of the relative components (2).

19. Method according to Claim 18, wherein each grip assembly (27) comprises at least two further relative clamping vices (28), the method further comprising the step of:
selectively controlling during said forth stroke the position of the further clamping vices (28) in the first direction (4) according to the size of the relative components (2) and/or to the processing to be carried out on the components (2) and/or in order to allow the transfer of the components (2) between the clamping vices (12) and the further clamping vices (28) thus avoiding any interference between the clamping vices (12) and the further clamping vices (28).

20. Method according to Claim 14 or 15, and further comprising the step of:
moving the grip and transfer assemblies (6a, 6b, 6c) along the base (3) in the first direction (4) with respective identical laws of motion.

## Patentansprüche

1. Maschine zur Verarbeitung von Rahmenkomponenten (2) aus Holz oder dergleichen, wobei jede Komponente (2) eine längliche Form aufweist; wobei die Maschine eine Basis (3) umfasst, die sich in einer vorgegebenen ersten Richtung (4) erstreckt; eine Einlassstation (15) wenigstens einer Komponente (2) in die Maschine; eine Auslassstation (16) der Komponente (2) aus der Maschine; und wenigstens eine Bearbeitungsstation (17, 18), welche zwischen der Einlass- und der Auslassstation (15, 16) angeordnet ist, zu der Einlass- und Auslassstation (15, 16) in der ersten Richtung (4) ausgerichtet ist, mit wenigstens einer Bearbeitungseinheit (19) zum Bearbeiten der Komponente (2) versehen ist und eine Greifbaueinheit (27) umfasst, um die Komponente (2) parallel zu der ersten Richtung (4) während der Bearbeitung mit der Bearbeitungseinheit (19) zu halten; **dadurch gekennzeichnet, dass** sie ferner eine Greif- und Transfereinheit (5) umfasst, die geeignet ist, um jede Komponente (2) längs in der ersten Richtung (4) und entlang eines vorgegebenen Weges (P) vorwärts zu bewegen, der sich durch die Einlassstation (15), die Bearbeitungsstation (17, 18) und die Auslassstation (16) erstreckt, und die beweglich mit einer abwechselnden geradlinigen Bewegung ist, umfassend einen Vorwärtshub zum Zuführen wenigstens einer ersten Komponente (2) aus der Einlassstation (15) zu der Bearbeitungsstation (17, 18) und wenigstens einer zweiten Komponente (2) aus der Bearbeitungsstation (17, 18) zu der Auslassstation (16), und einen Rückwärtshub.

2. Maschine gemäß Anspruch 1, wobei die Greif- und Transfereinheit (5) eine erste Greif- und Transferbaueinheit (6a) umfasst, die beweglich zwischen der Einlassstation (15) und der Bearbeitungsstation (17, 18) ist, und eine zweite Greif- und Transferbaueinheit (6c), die beweglich zwischen der Arbeitsstation (17, 18) und der Auslassstation (16) ist; wobei jede der genannten ersten und zweiten Greif- und Transferbaueinheiten (6a, 6c) und die Greifbaueinheit (27) wechselseitig beweglich in einer zweiten Richtung (11) im Wesentlichen horizontal und quer zu der ersten Richtung (4) sind, um den Transfer der Komponenten (2) zwischen den Greif- und Transferbaueinheiten (6a, 6b) und der Greifbaueinheit (27) zu ermöglichen.

3. Maschine gemäß Anspruch 1 oder 2 und ferner umfassend wenigstens zwei der genannten Bearbeitungsstationen (17, 18), welche zwischen der Einlass- und Auslassstation (15, 16) angeordnet sind, welche zueinander und zu der Einlass- und der Auslassstation (15, 16) in der ersten Richtung (4) und entlang des Weges (P) ausgerichtet sind, welche mit jeweils den genannten Bearbeitungseinheiten (19) zum Bearbeiten von zwei wechselseitig entgegengesetzten Längsseiten (2a, 2b) von jeder Komponente (2) versehen sind, und welche jeweils die genannten Greifbaueinheiten (27) angeordnet auf entgegengesetzten Seiten des Weges (P) in einer zweiten Richtung (11) im Wesentlichen horizontal und quer zu der ersten Richtung (4) umfassen.

4. Maschine gemäß Anspruch 3, wobei die Greif- und Transfereinheit (5) eine erste Greif- und Transferbaueinheit (6a) beweglich zwischen der Einlassstation (15) und einer ersten der genannten Arbeitsstationen (17) umfasst, ferner eine zweite Greif- und Transferbaueinheit (6b) beweglich zwischen der ersten Arbeitsstation (17) und einer zweiten der genannten Arbeitsstationen (18), und eine dritte Greif- und Transferbaueinheit (6c) beweglich zwischen der zweiten Arbeitsstation (18) und der Auslassstation (16); jede der genannten ersten, zweiten und dritten Greif- und Transferbaueinheiten (6a, 6b, 6c) und jede der genannten Greifbaueinheiten (27) ist wechselseitig beweglich in der zweiten Richtung (11), um den Transfer der Komponenten (2) zwischen den Greif- und Transferbaueinheiten (6a, 6b, 6c) und den Greifbaueinheiten (27) zu ermöglichen.

5. Maschine gemäß Anspruch 4, wobei die genannte wechselseitige geradlinige Bewegung einen Vorwärtshub zum Zuführen einer ersten Komponente (2) aus der Einlassstation (15) zu der ersten Bearbeitungsstation (17), einer zweiten Komponente (2) aus der ersten Bearbeitungsstation (17) zu der zweiten Bearbeitungsstation (18) und einer dritten Komponente (2) aus der zweiten Bearbeitungsstation (18) zu der Auslassstation (16) umfasst, und ferner einen Rückwärtshub.

6. Maschine gemäß Anspruch 4 oder 5, wobei die Greifbaueinheit (27) der zweiten Bearbeitungsstation (18) eine Tragebene (A) für die Komponente (2) definiert; jede der genannten zweiten und dritten Greif- und Transferbaueinheiten (6b, 6c) und die Greifbaueinheit (27) der zweiten Bearbeitungsstation (18) wechselseitig beweglich in einer dritten Richtung (9) im Wesentlichen vertikal und senkrecht zu der genannten ersten und der genannten zweiten Richtung (4, 11) ist, um jede der genannten zweiten und dritten Greif- und Transferbaueinheiten (6b, 6c) unterhalb der Tragebene (A) zu bewegen.

7. Maschine gemäß einem der vorgehenden Ansprüche, wobei jede der genannten Greif- und Transferbaueinheiten (6a, 6b, 6c) wenigstens einen Spannstock (12) umfasst und jede der genannten Greifbaueinheiten (27) wenigstens einen Spannstock (28) umfasst.

8. Maschine gemäß Anspruch 7, wobei jede Greif- und Transferbaueinheit (6a, 6b, 6c) wenigstens zwei Spannstöcke (12) umfasst, die wechselseitig beweglich in der ersten Richtung (4) sind, und jede Greifbaueinheit (27) wenigstens zwei weitere Spannstöcke (28) umfasst, die wechselseitig beweglich in der ersten Richtung (4) sind.

9. Maschine gemäß einem der vorgehenden Ansprüche, wobei jede Bearbeitungseinheit (19) einen Brückenkran (20) umfasst, der beweglich entlang der Basis (3) in der ersten Richtung (4) ist, sich oberhalb der Basis (3) in einer zweiten Richtung (11) im Wesentlichen horizontal und quer zu der ersten Richtung (4) erstreckt und mit wenigstens einem Bearbeitungskopf (23) zum Bearbeiten der Komponenten (2) versehen ist.

10. Maschine gemäß Anspruch 9, wobei jede Bearbeitungseinheit (19) ferner ein Werkzeughaltermagazin für eine Vielzahl von Werkzeugen (26) umfasst, und eine Werkzeugwechseleinrichtung zum Transferieren von jedem Werkzeug (26) zwischen dem Bearbeitungskopf (23) und dem Werkzeughaltermagazin.

11. Maschine gemäß Anspruch 9 oder 10, wobei jeder Brückenkran (20) beweglich entlang der Basis (3) in der ersten Richtung (4) mit einem relativen Bewegungsgesetz unabhängig von dem Bewegungsgesetz der Greif- und Transfereinheit (5) ist.

12. Maschine gemäß Anspruch 2 oder 4, wobei die Greif- und Transferbaueinheiten (6a, 6b, 6c) beweglich entlang der Basis (3) in der ersten Richtung (4) mit entsprechenden identischen Bewegungsgesetzen sind.

13. Verfahren zum Bearbeiten von Rahmenkomponenten (2) aus Holz oder dergleichen, wobei jede Komponente (2) eine längliche Form aufweist, in einer Maschine, umfassend eine Basis (3), die sich in einer vorgegebenen ersten Richtung (4) erstreckt; eine Einlassstation (15) für wenigstens eine Komponente (2) in die Maschine; eine Auslassstation (16) der Komponente (2) aus der Maschine; und wenigstens eine Bearbeitungsstation (17, 18), welche zwischen der Einlass- und der Auslassstation (15, 16) angeordnet ist, zu der Einlass- und der Auslassstation (15, 16) in der ersten Richtung (4) ausgerichtet ist, mit wenigstens einer Bearbeitungseinheit (19) zum Bearbeiten der Komponente (2) versehen ist, und eine Greifbaueinheit (27) umfasst, um die Komponente (2) parallel zu der ersten Richtung (4) während der Bearbeitung mit der Bearbeitungseinheit (19) zu halten; wobei das Verfahren die folgenden Schritte umfasst:
Vorwärtsbewegen in Längsrichtung von jeder Komponente (2) in der ersten Richtung (4) und entlang eines vorgegebenen Weges (P), der sich durch die Einlassstation (15), die Bearbeitungsstation (17, 18) und die Auslassstation (16) erstreckt, mittels einer Greif- und Transfereinheit (5);
und welches **dadurch gekennzeichnet ist, dass** es ferner den folgenden Schritt umfasst:
Bewegen der Greif- und Transfereinheit (5) mit einer abwechselnden geradlinigen Bewegung, die einen Vorwärtshub zum Zuführen wenigstens einer ersten Komponente (2) aus der Einlassstation (15) zu der Bearbeitungsstation (17, 18) und wenigstens einer zweiten Komponente (2) aus der Bearbeitungsstation (17, 18) zu der Auslassstation (16) umfasst, und ferner einen Rückwärtshub.

14. Verfahren gemäß Anspruch 13, und ferner umfassend die folgenden Schritte:
Bewegen einer ersten Greif- und Transferbaueinheit (6a) der Greif- und Transfereinheit (5) zwischen der Einlassstation (15) und der Bearbeitungsstation (17, 18);
Bewegen einer zweiten Greif- und Transferbaueinheit (6c) der Greif- und Transfereinheit (5) zwischen der Bearbeitungsstation (17, 18) und der Auslassstation (16); und
wechselseitiges Bewegen jeder der genannten ersten und zweiten Greifund Transferbaueinheiten (6a, 6c) und der Greifbaueinheit (27) in einer zweiten Richtung (11) im Wesentlichen horizontal und quer zu der ersten Richtung (4), um den Transfer der Komponenten (2) zwischen den Greifund Transferbaueinheiten (6a, 6b) und der Greifbaueinheit (27) zu ermöglichen.

15. Verfahren gemäß Anspruch 13 oder 14, wobei der Weg (P) sich durch zwei der genannten Bearbeitungsstationen (17, 18) erstreckt, die zwischen der Einlass- und der Auslassstation (15, 16) angeordnet sind, zueinander und zu der Einlass- und der Auslassstation (15, 16) ausgerichtet sind in der ersten Richtung (4), mit jeweils den genannten Bearbeitungseinheiten (19) zum Bearbeiten von zwei entgegengesetzten Längsseiten (2a, 2b) von jeder Komponente (2) versehen sind, und jeweils die genannten Greifbaueinheiten (27) angeordnet auf entgegengesetzten Seiten des Weges (P) in einer zweiten Richtung (11) im Wesentlichen horizontal und quer zu der ersten Richtung (4) umfassen; wobei das Verfahren ferner die folgenden Schritte umfasst:
Bewegen einer ersten Greif- und Transferbaueinheit (6a) der Greif- und Transfereinheit (5) zwischen der Einlassstation (15) und einer ersten der genannten Bearbeitungsstationen (17);
Bewegen einer zweiten Greif- und Transferbaueinheit (6b) der Greif- und Transfereinheit (5) zwischen der ersten Bearbeitungsstation (17, 18) und einer zweiten der genannten Bearbeitungsstationen (18);
Bewegen einer dritten Greif- und Transferbaueinheit (6c) der Greif- und Transfereinheit (5) zwischen der zweiten Bearbeitungsstation (18) und der Auslassstation (16); und
wechselseitige Bewegen von jeder der genannten ersten, zweiten und dritten Greif- und Transferbaueinheiten (6a, 6b, 6c) und jeder der genannten Greifbaueinheiten (27) in der zweiten Richtung (11), um den Transfer der Komponenten (2) zwischen den Greif- und Transferbaueinheiten (6a, 6b, 6c) und den Greifbaueinheiten (27) zu ermöglichen.

16. Verfahren gemäß Anspruch 15, und ferner umfassend den folgenden Schritt:
Vorwärtsbewegen während des vierten Hubs der Greif- und Transfereinheit (5), einer ersten Komponente (2) aus der Einlassstation (15) zu der ersten Bearbeitungsstation (17), einer zweiten Komponente (2) aus der ersten Bearbeitungsstation (17) zu der zweiten Bearbeitungsstation (18), und einer dritten Komponente (2) aus der zweiten Bearbeitungsstation (18) zu der Auslassstation (16).

17. Verfahren gemäß Anspruch 15 oder 16, wobei die Greifbaueinheit (27) der zweiten Bearbeitungsstation (18) eine Tragebene (A) für die Komponente (2) definiert, wobei das Verfahren ferner den folgenden Schritt umfasst:
wechselseitiges Bewegen jeder der genannten zweiten und dritten Greifund Transferbaueinheiten (6b, 6c) und der Greifbaueinheit (27) der zweiten Bearbeitungsstation (18) in einer dritten Richtung (9) im Wesentlichen vertikal und senkrecht zu der ersten und zweiten Richtung (4, 11), um jede der genannten zweiten und dritten Greif- und Transferbaueinheiten (6b, 6c) unterhalb der Tragebene (A) zu bewegen.

18. Verfahren gemäß einem der Ansprüche 13 bis 17, wobei jede Greif- und Transferbaueinheit (6a, 6b, 6c) wenigstens zwei Spannstöcke (12) umfasst, und das Verfahren ferner den folgenden Schritt umfasst:
selektives Steuern während des genannten Rückwärtshubes der Position der Spannstöcke (12) von jeder Greif- und Transferbaueinheit (6a, 6b, 6c) in der ersten Richtung (4) und/oder in einer zweiten Richtung (11) im Wesentlichen horizontal und quer zu der ersten Richtung (4) entsprechend der Größe der relativen Komponenten (2).

19. Verfahren gemäß Anspruch 18, wobei jede Greifbaueinheit (27) wenigstens zwei weitere Spannstöcke (28) umfasst, wobei das Verfahren ferner den folgenden Schritt umfasst:
selektives Steuern während des genannten Vorwärtshubes der Position der weiteren Spannstöcke (28) in der ersten Richtung (4) entsprechend der Größe der jeweiligen Komponenten (2) und/oder entsprechend der Bearbeitung, die an den Komponenten (2) ausgeführt werden soll,
und/oder um den Transfer der Komponenten (2) zwischen den Spannstöcken (12) und den weiteren Spannstöcken (28) zu ermöglichen, sodass jede Interferenz zwischen den Spannstöcken (12) und den weiteren Spannstöcken (28) verhindert wird.

20. Verfahren gemäß Anspruch 14 oder 15, und ferner umfassend den folgenden Schritt:
Bewegen der Greif- und Transferbaueinheiten (6a, 6b, 6c) entlang der Basis (3) in der ersten Richtung (4) mit jeweiligen identischen Bewegungsgesetzen.

## Revendications

1. Machine pour traiter des composants d'ossature (2) en bois ou analogue, chaque composant (2) ayant une forme allongée ; la machine comprenant une base (3) s'étendant dans une première direction donnée (4) ; une station d'entrée (15) d'au moins un composant (2) dans la machine ; une station de sortie (16) du composant (2) de la machine ; et au moins une station de travail (17, 18) qui est disposée entre les stations d'entrée et de sortie (15, 16) est alignée par rapport aux stations d'entrée et de sortie (15, 16) dans la première direction (4), est munie d'au moins une unité de travail (19) pour traiter le composant (2), et comprend un ensemble de prise (27) pour maintenir le composant (2) parallèlement à la première direction (4) pendant le traitement de l'unité de travail (19) ; et étant **caractérisée en ce qu'**elle comprend en outre une unité de prise et de transfert (5) qui est adaptée pour faire avancer longitudinalement chaque composant (2) dans la première direction (4) et le long d'un chemin donné (P) s'étendant à travers la station d'entrée (15), la station de travail (17, 18) et la station de sortie (16), et peut se déplacer en un mouvement alternatif rectiligne comprenant une course aller pour amener au moins un premier composant (2) de la station d'entrée (15) jusqu'à la station de travail (17, 18) et au moins un deuxième composant (2) de la station de travail (17, 18) jusqu'à la station de sortie (16), et une course retour.

2. Machine selon la revendication 1, dans laquelle l'unité de prise et de transfert (5) comprend un premier ensemble de prise et de transfert (6a) pouvant se déplacer entre la station d'entrée (15) et la station de travail (17, 18) et un deuxième ensemble de prise et de transfert (6c) pouvant se déplacer entre la station de travail (17, 18) et la station de sortie (16) ; chacun desdits premier et deuxième ensembles de prise et de transfert (6a, 6c) et l'ensemble de prise (27) étant mobiles les uns par rapport aux autres dans une deuxième direction (11) sensiblement horizontale et transversale par rapport à la première direction (4) pour permettre le transfert des composants (2) entre les ensembles de prise et de transfert (6a, 6c) et l'ensemble de prise (27).

3. Machine selon la revendication 1 ou la revendication 2, comprenant au moins deux dites stations de travail (17, 18) qui sont disposées entre les stations d'entrée et de sortie (15, 16), sont alignées l'une par rapport à l'autre et par rapport aux stations d'entrée et de sortie (15, 16) dans la première direction (4) et le long du chemin (P), sont munies de dites unités de travail (19) respectives pour traiter deux faces longitudinales mutuellement opposées (2a, 2b) de chaque composant (2), et comprennent desdits ensembles de prise (27) respectifs disposés sur des côtés opposés du chemin (P) dans une deuxième direction (11) sensiblement horizontale et transversale par rapport à la première direction (4).

4. Machine selon la revendication 3, dans laquelle l'unité de prise et de transfert (5) comprend un premier ensemble de prise et de transfert (6a) pouvant se déplacer entre la station d'entrée (15) et une première desdites stations de travail (17), un deuxième ensemble de prise et de transfert (6b) pouvant se déplacer entre la première station de travail (17, 18) et une deuxième desdites stations de travail (18), et un troisième ensemble de prise et de transfert (6c) pouvant se déplacer entre la deuxième station de travail (18) et la station de sortie (16) ; chacun desdits premier, deuxième et troisième ensembles de prise et de transfert (6a, 6b, 6c) et chacun desdits ensembles de prise (27) étant mobiles les uns par rapport aux autres dans la deuxième direction (11) pour permettre le transfert des composants (2) entre les ensembles de prise et de transfert (6a, 6b, 6c) et les ensembles de prise (27).

5. Machine selon la revendication 4, dans laquelle ledit mouvement alternatif rectiligne comprend une course aller pour amener un premier composant (2) à partir de la station d'entrée (15) jusqu'à la première station de travail (17), un deuxième composant (2) à partir de la première station de travail (17) jusqu'à la deuxième station de travail (18), et un troisième composant (2) à partir de la deuxième station de travail (18) jusqu'à la station de sortie (16), et une course retour.

6. Machine selon la revendication 4 ou la revendication 5, dans laquelle l'ensemble de prise (27) de la deuxième station de travail (18) définit un plan de support (A) pour le composant (2) ; chacun desdits deuxième et troisième ensembles de prise et de transfert (6b, 6c) et l'ensemble de prise (27) de la deuxième station de travail (18) étant mobiles les uns par rapport aux autres dans une troisième direction (9) sensiblement verticale et orthogonale par rapport auxdites première et deuxième directions (4, 11) afin de déplacer chacun desdits deuxième et troisième ensembles de prise et de transfert (6b, 6c) en dessous du plan de support (A).

7. Machine selon l'une quelconque des revendications précédentes, dans laquelle chacun desdits ensembles de prise et de transfert (6a, 6b, 6c) comprend au moins un étau de serrage relatif (12) et chacun desdits ensembles de prise (27) comprend au moins un étau de serrage relatif (28).

8. Machine selon la revendication 7, dans laquelle chaque ensemble de prise et de transfert (6a, 6b, 6c) comprend au moins deux étaux de serrage relatifs (12) mobiles l'un par rapport à l'autre dans la première direction (4) et chaque ensemble de prise (27) comprend au moins deux étaux de serrage relatifs (28) supplémentaires mobiles l'un par rapport à l'autre dans la première direction (4).

9. Machine selon l'une quelconque des revendications précédentes, dans laquelle chaque unité de travail (19) comprend une grue à portique (20) qui peut se déplacer le long de la base (3) dans la première direction (4), s'étend au-dessus de la base (3) dans une deuxième direction (11) sensiblement horizontale et transversale par rapport à la première direction (4), et est munie d'au moins une tête de travail (23) pour traiter les composants (2).

10. Machine selon la revendication 9, dans laquelle chaque unité de travail (19) comprend en outre un magasin porte-outil pour une pluralité d'outils (26) et un dispositif de changement d'outils pour transférer chaque outil (26) entre la tête de travail concernée (23) et le magasin porte-outil.

11. Machine selon la revendication 9 ou la revendication 10, dans laquelle chaque grue à portique (20) peut se déplacer le long de la base (3) dans la première direction (4) avec une règle relative de mouvement indépendante de la règle de mouvement de l'unité de prise et de transfert (5).

12. Machine selon la revendication 2 ou la revendication 4, dans laquelle les ensembles de prise et de transfert (6a, 6b, 6c) peuvent se déplacer le long de la base (3) dans la première direction (4) avec des règles de mouvement respectives identiques.

13. Procédé pour traiter des composants d'ossature (2) en bois ou analogue, chaque composant (2) ayant une forme allongée, dans une machine comprenant une base (3) s'étendant dans une première direction donnée (4) ; une station d'entrée (15) d'au moins un composant (2) dans la machine ; une station de sortie (16) du composant (2) de la machine ; et au moins une station de travail (17, 18) qui est disposée entre les stations d'entrée et de sortie (15, 16), est alignée par rapport aux stations d'entrée et de sortie (15, 16) dans la première direction (4), est munie d'au moins une unité de travail (19) pour traiter le composant (2), et comprend un ensemble de prise (27) pour maintenir le composant (2) parallèlement à la première direction (4) pendant le traitement de l'unité de travail (19) ; le procédé comprenant l'étape consistant à :
faire avancer longitudinalement chaque composant (2) dans la première direction (4) et le long d'un chemin donné (P) s'étendant à travers la station d'entrée (15), la station de travail (17, 18) et la station de sortie (16) au moyen d'une unité de prise et de transfert (5) ;
et étant **caractérisé en ce qu'**il comprend en outre l'étape consistant à :
déplacer l'unité de prise et de transfert (5) en un mouvement alternatif rectiligne comprenant une course aller pour amener au moins un premier composant (2) de la station d'entrée (15) jusqu'à la station de travail (17, 18) et au moins un deuxième composant (2) de la station de travail (17, 18) jusqu'à la station de sortie (16), et une course retour.

14. Procédé selon la revendication 13, comprenant en outre les étapes consistant à :
déplacer un premier ensemble de prise et de transfert (6a) de l'unité de prise et de transfert (5) entre la station d'entrée (15) et la station de travail (17, 18) ;
déplacer un deuxième ensemble de prise et de transfert (6c) de l'unité de prise et de transfert (5) entre la station de travail (17, 18) et la station de sortie (16) ; et
déplacer les uns par rapport aux autres chacun desdits premier et deuxième ensembles de prise et de transfert (6a, 6c) et l'ensemble de prise (27) dans une deuxième direction (11) sensiblement horizontale et transversale par rapport à la première direction (4) pour permettre le transfert des composants (2) entre les ensembles de prise et de transfert (6a, 6c) et l'ensemble de prise (27).

15. Procédé selon la revendication 13 ou la revendication 14, dans lequel le chemin (P) s'étend à travers deux dites stations de travail (17, 18) qui sont disposées entre les stations d'entrée et de sortie (15, 16), sont alignées l'une par rapport à l'autre et par rapport aux stations d'entrée et de sortie (15, 16) dans la première direction (4), sont munies de dites unités de travail (19) respectives pour traiter deux faces longitudinales opposées (2a, 2b) de chaque composant (2), et comprennent desdits ensembles de prise (27) respectifs disposés sur des côtés opposés du chemin (P) dans une deuxième direction (11) sensiblement horizontale et transversale par rapport à la première direction (4) ; le procédé comprenant en outre les étapes consistant à :
déplacer un premier ensemble de prise et de transfert (6a) de l'unité de prise et de transfert (5) entre la station d'entrée (15) et ladite première station de travail (17) ;
déplacer un deuxième ensemble de prise et de transfert (6b) de l'unité de prise et de transfert (5) entre la première station de travail (17, 18) et ladite deuxième station de travail (18) ;
déplacer un troisième ensemble de prise et de transfert (6c) de l'unité de prise et de transfert (5) entre la deuxième station de travail (18) et la station de sortie (16) ; et
déplacer les uns par rapport aux autres chacun desdits premier, deuxième et troisième ensembles de prise et de transfert (6a, 6b, 6c) et chacun desdits ensembles de prise (27) dans la deuxième direction (11) pour permettre le transfert des composants (2) entre les ensembles de prise et de transfert (6a, 6b, 6c) et les ensembles de prise (27).

16. Procédé selon la revendication 15, comprenant en outre l'étape consistant à :
faire avancer, pendant la course aller de l'unité de prise et de transfert (5), un premier composant (2) à partir de la station d'entrée (15) jusqu'à la première station de travail (17), un deuxième composant (2) à partir de la première station de travail (17) jusqu'à la deuxième station de travail (18), et un troisième composant (2) à partir de la deuxième station de travail (18) jusqu'à la station de sortie (16).

17. Procédé selon la revendication 15 ou la revendication 16, dans lequel l'ensemble de prise (27) de la deuxième station de travail (18) définit un plan de support (A) pour le composant (2), le procédé comprenant en outre l'étape consistant à :
déplacer les uns par rapport aux autres chacun desdits deuxième et troisième ensembles de prise et de transfert (6b, 6c) et l'ensemble de prise (27) de la deuxième station de travail (18) dans une troisième direction (9) sensiblement verticale et orthogonale par rapport auxdites première et deuxième direction (4, 11) afin de déplacer chacun desdits deuxième et troisième ensembles de prise et de transfert (6b, 6c) en dessous du plan de support (A).

18. Procédé selon l'une quelconque des revendications 13 à 17, dans lequel chaque ensemble de prise et de transfert (6a, 6b, 6c) comprend au moins deux étaux de serrage relatifs (12), le procédé comprenant en outre l'étape consistant à :
commander de manière sélective, pendant ladite course retour, la position des étaux de serrage (12) de chaque ensemble de prise et de transfert (6a, 6b, 6c) dans la première direction (4) et/ou dans une deuxième direction (11) sensiblement horizontale et transversale par rapport à la première direction (4) en fonction de la taille des composants (2) concernés.

19. Procédé selon la revendication 18, dans lequel chaque ensemble de prise (27) comprend au moins deux étaux de serrage relatifs (28) supplémentaires, le procédé comprenant en outre l'étape consistant à :
commander de manière sélective, pendant ladite course aller, la position des étaux de serrage (28) supplémentaires dans la première direction (4) en fonction de la taille des composants (2) concernés et/ou en fonction du traitement à exécuter sur les composants (2) et/ou pour permettre le transfert des composants (2) entre les étaux de serrage (12) et les étaux de serrage (28) supplémentaires, ce qui permet d'éviter toute interférence entre les étaux de serrage (12) et les étaux de serrage (28) supplémentaires.

20. Procédé selon la revendication 14 ou la revendication 15, comprenant en outre l'étape consistant à :
déplacer les ensembles de prise et de transfert (6a, 6b, 6c) le long de la base (3) dans la première direction (4) avec des règles de mouvement respectives identiques.
